# EUROPÄISCHE PATENTSCHRIFT

(11) **EP 0 482 301 B1**
(45) Veröffentlichungstag und Bekanntmachung des Hinweises auf die Patenterteilung: **01.05.1996**
(21) Anmeldenummer: 91113183.7
(22) Anmeldetag: 06.08.1991
(51) Int. Cl.: H04N 5/91, H04N 5/92, H04N 9/79

(54) **Verfahren und Einrichtung für die Aufzeichnung und Wiedergabe von mit digitaler Zusatzinformation versehenen Fernsehsignalen mit einem Videoaufzeichnungsgerät**
Method of and device for recording and playing back television signals including additional digital information with a videorecorder
Méthode et dispositif pour l'enregistrement et la restitution de signaux de télévision pourvus d'une information digitale supplémentaire à l'aide d'un magnétoscope

(30) Priorität: 20.10.1990 DE 4033409
(43) Veröffentlichungstag der Anmeldung: 29.04.1992
(73) Patentinhaber: GRUNDIG E.M.V. Elektro-Mechanische Versuchsanstalt Max Grundig GmbH & Co. KG, D-90762 Fürth (DE)
(72) Erfinder: Kays, Rüdiger, Dr., Grundig E.M.V., Max Grundig, W-8510 Fuerth (DE)

(56) Entgegenhaltungen:
- EP-A- 0 335 273
- FR-A- 2 586 879
- US-A- 4 065 794
- US-A- 4 855 827

## Beschreibung

Die Erfindung betrifft ein Verfahren und eine Einrichtung zur Erweiterung von Videoaufzeichnungsgeräten derart, daß Fernsehsignale verarbeit werden können, die digitale Zusatzinformationen enthalten.

Die Aufzeichnung und Wiedergabe von Fernsehsignalen, die nach neuen Fernsehverfahren wie z. B. PALplus (siehe Fernseh- und Kino-Technik, 8/1989, S. 407 - 410) codiert sind, ist mit herkömmlichen Videoaufzeichnungsgeräten nicht möglich, da bei diesem neuen Fernsehverfahren die Verwendung zusätzlicher digitaler Daten vorgesehen ist. Diese Daten - bekannt unter dem Namen DATV: Digitally Assisted Tele Vision - dienen der Verbesserung der Bildqualität und können z. B. in den horizontalen Austastlücken des Fernsehsignals oder den schwarzen Randzeilen, bei Übertragung von Filmen im Breitformat und deren Wiedergabe auf Bildschirmen im 4:3-Format (Letterbox-Verfahren), mit übertragen werden.

Aus der französichen Offenlegungsschrift FR 2 586 879 A1 ist ein Stereo-Videoaufzeichnungsgerät bekannt, das die Aufzeichnung von Videotext in digitaler Form in einer der Tonspur ermöglicht. Zu diesem Zweck wird die Datenrate des digitalen Videotextsignals vor der Aufzeichung verringert um die Aufzeichnung in der Tonspur zu ermöglichen. Damit es möglicht ist, die zu einem jeweiligen Bild gehörige Videotextinformation zeitgleich mit diesem Bild darzustellen, werden die Videotextsignale im Sender zeitlich verschoben (verfrüht) von den zugehörigen Bildern erzeugt und ausgesendet.

Das bekannte Videoaufzeichnungsgerät weist somit den Nachteil auf, daß durch die zeitliche Dehnung der digitalen Daten der Zusammenhang zwischen digitalen Daten und zugehörigem Bild verloren geht. Darüberhinaus ist bei herkömmlichen Stereo-Videorecordern die Aufnahme von Stereoton nicht mehr möglich.

Aufgabe der Erfindung ist es deshalb, ein Verfahren und eine Einrichtung anzugeben, mittels denen es möglich ist, herkömmliche Videoaufzeichnungsgeräte mit geringem Aufwand so umzugestalten, daß diese in der Lage sind, Fernsehsignale mit digitaler Zusatzinformation aufzuzeichnen und wiederzugeben, ohne daß die Funktion der Videoaufzeichnungsgeräte beschränkt wird und ohne die Notwendigkeit senderseitiger Veränderungen des aufzuzeichnenden Videosignals.

Erfindungsgemäß wird diese Aufgabe nach der Lehre der patentansprüche 1 und 2 gelöst. Patentanspruch 3 gibt eine bevorzugte Ausführungsform an.

Für die Aufzeichnung der digitalen Zusatzinformationen wird ein herkömmliches Videoaufzeichnungsgerät, welches einen PCM-Kanal zur Tonsignalaufzeichnung hat, um eine Einrichtung erweitert, die eine Abtrennstufe für die digitalen Zusatzinformationen, eine Stufe zur Formatierung der digitalen Zusatzinformationen für die PCM-Aufzeichnung, eine Stufe zur Datenreduktion der digital aufzuzeichnenden Tondaten und eine Stufe zum Zusammenfügen der datenreduzierten Tondaten mit den formatierten digitalen Zusatzinformationen enthält. Die Abtrennstufe extrahiert die digitalen Zusatzinformationen aus dem Fernsehsignal. In der nachfolgenden Stufe wird das Signal für die PCM-Aufzeichnung geeignet formatiert. Die Tondaten werden mit Datenreduktionsverfahren, wie sie z. B. im Eureka-Projekt 147 "Digital Audio Broadcasting" untersucht werden, reduziert und gemeinsam mit dem aufbereiteten digitalen Zusatzinformationen auf dem PCM-Kanal des Videoaufzeichnungsgerätes aufgezeichnet. Das Eureka-Projekt 147 wird in dem Aufsatz "DAB-EIN NEUES HÖRRUNDFUNKSYSTEM" von G. Plenge, RTM, Heft 2, 1991, Seiten 45 - 66, näher beschrieben.

Für die Wiedergabe der so aufgezeichneten Signale weist die Einrichtung eine Stufe zum Trennen des wiedergegebenen Signals in datenreduziertes Tonsignal und formatierte digitale Zusatzinformationen, eine Stufe zum Wiederherstellen der ursprünglichen Datenstruktur der digitalen Zusatzinformationen und eine Stufe, die das datenreduzierte Tonsignal rückwandelt, auf.

Vorteil der Erfindung nach den Ansprüchen 1 und 2 ist es, daß herkömmliche Videoaufzeichnungsgeräte zur Aufzeichung und Wiedergabe von Fernsehsignalen mit digitalen Zusatzinformationen verwendet werden können, ohne die Aufzeichnungsmöglichkeiten der verwendeten Videoaufzeichnungsgeräte einzuschränken. Ebenso sind keine senderseitigen Veränderungen der aufzuzeichnenden Videosignale oder der aufzuzeichnenden digitalen Zusatzsinformationen nötig.

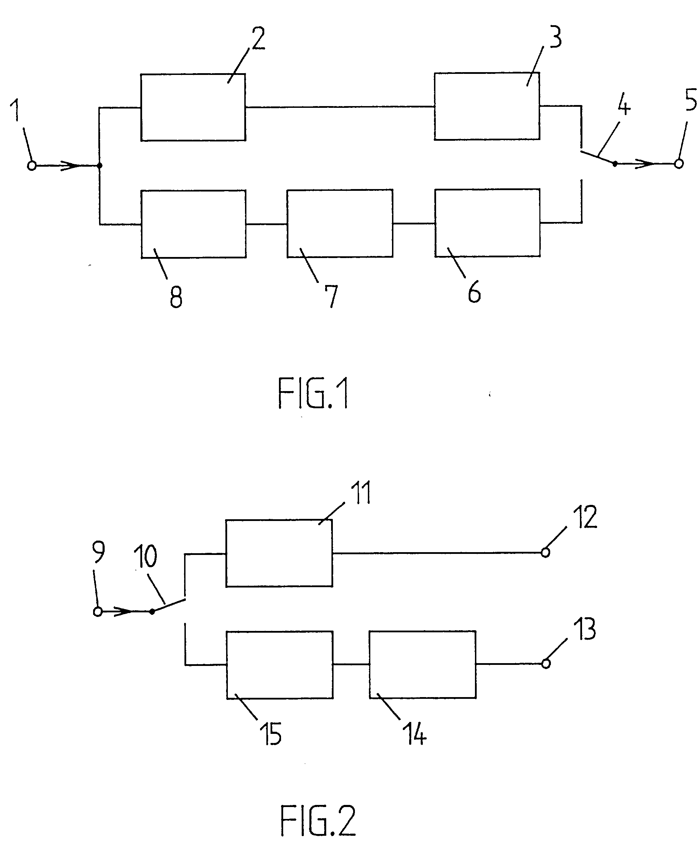

Die Einrichtung ist in Figur 1 und 2 noch einmal schematisch dargestellt. Es zeigt
Figur 1 den Teil der Einrichtung für die Aufnahme und
Figur 2 den Teil der Einrichtung für die Wiedergabe.

In Figur 1 wird aus dem FBAS-Signal 1, welches vom Zf-Demodulator kommt, in der Abtrennstufe 2 die digitale Zusatzinformation extrahiert und von der Aufbereitungsstufe 3 so formatiert, daß sie als PCM-Signal aufgezeichnet werden kann. Im Ton-Zf-Verstärker- und Demodulator 8 wird aus dem FBAS-Signal 1 das Tonsignal abgetrennt. Das Tonsignal wird in Stufe 7 digitalisiert. In anderen Anwendungen kann das Tonsignal bereits digitalisiert vorliegen, so daß auf Stufe 7 verzichtet werden kann. In Stufe 6 erfolgt die Datenreduktion des Tonsignals und die Formatierung für die PCM-Aufzeichnung. Mit der Schalteinheit 4 werden das datenreduzierte Tonsignal und die formatierten digitalen Zusatzinformationen zusammengefaßt und dem PCM-Kanal 5 des Videoaufzeichnungsgerätes zur Aufzeichnung zugeführt.

In Figur 2 wird das vom PCM-Kanal kommende Signal 9 mit der Schalteinheit 10 in formatierte digitale Zusatzinformationen und datenreduziertes Tonsignal getrennt. In Stufe 11 erfolgt die Wiederherstellung des ursprünglichen Datenformats der digitalen Zusatzinformationen, welche als Signal 12 zur weiteren Verarbeitung zur Verfügung stehen, während in Stufe 14 und 15 das Tonsignal rückgewandelt wird, wobei Stufe 15 die Datenreduktion rückgängig macht und in Stufe 14 die Wandlung in ein analoges Signal 13 erfolgt.

## Patentansprüche

1. Verfahren zur Aufzeichnung und Wiedergabe von mit digitaler Zusatzinformation versehenen Fernsehsignalen, mittels eines Videoaufzeichnungsgeräts mit standardgemäßem PCM-Kanal für die Aufzeichnung des Tonsignals,
**gekennzeichnet durch**
nachfolgende Verfahrensschritte bei der Aufnahme:
- Reduzieren der Datenmenge des aufzuzeichnenden Tonsignals;
- Extrahieren der in den nicht mit Bildinformationen belegten Zeitintervallen oder spektralen Lücken des Fernsehsignals übertragenen digitalen Zusatzinformationen;
- Formatieren der digitalen Zusatzinformationen für die Aufzeichnung im PCM-Kanal;
- Zusammenfassen von datenreduziertem Tonsignal mit den formatierten digitalen Zusatzinformationer für die gemeinsame PCM-Aufzeichnung auf dem PCM-Kanal des Videoaufzeichnungsgeräts;
und nachfolgende Verfahrensschritte bei der Wiedergabe:
- Trennen von digitalem, datenreduzierten Tonsignal von den digitalen Zusatzinformationen;
- Wiederherstellen des ursprünglichen Datenformats der digitalen Zusatzinformationen;
- Wiederherstellen des ursprünglichen Tonsignals aus dem datenreduzierten Tonsignal.

2. Einrichtung für die Aufzeichnung und Wiedergabe von mit digitaler Zusatzinformation versehenen Fernsehsignalen, bestehend aus einem Videoaufzeichnungsgerät mit standardgemäßem PCM-Kanal für die Aufzeichnung des Tonsignals,
**dadurch gekennzeichnet**,
daß die Einrichtung für die Aufzeichnung aufweist:
- eine Stufe (6) zur Reduzierung der Datenmenge des aufzuzeichnenden Tonsignals;
- eine Abtrennstufe (2), welche die in den nicht mit Bildinformationen belegten Zeitintervallen oder spektralen Lücken des Fernsehsignals übertragenen digitalen Zusatzinformationen extrahiert;
- eine Aufbereitungsstufe (3), welche die digitalen Zusatzinformationen für die PCM-Aufzeichnung formatiert (3);
- eine Schalteinheit (4), welche das datenreduzierte Tonsignal mit den formatierten digitalen Zusatzinformationen für die gemeinsame PCM-Aufzeichnung auf dem PCM-Kanal (5) des Videoaufzeichnungsgeräts zusammenfaßt;
und daß die Einrichtung für die Wiedergabe aufweist:
- eine Schalteinheit (10), welche das digitale datenreduzierte Tonsignal von den digitalen Zusatzinformationen trennt;
- eine Stufe (11) zur Wiederherstellung des ursprünglichen Datenformats der digitalen Zusatzinformationen;
- eine Stufe (14,15) zur Wiederherstellung des ursprünglichen Tonsignals aus dem datenreduzierten Tonsignal.

3. Einrichtung nach Anspruch 2,
dadurch gekennzeichnet,
daß die Stufe (14,15) zur Wiederherstellung des ursprünglichen Tonsignals einen Bestandteil (15) zum Rückgängigmachen der Datenreduktion und einen Digital/Analog-Wandler (14) aufweist.

## Claims

1. Method for recording and playing back television signals provided with digital additional information, by means of a video recorder having standard PCM channel for the recording of the audio signal, characterized by the following method steps during recording:
- reduction of the dataset of the audio signal to be recorded;
- extraction of the digital additional information transmitted in the time intervals not occupied by picture information or spectral gaps in the television signal;
- formatting of the digital additional information for recording in the PCM channel;
- combination of data-reduced audio signal with the formatted digital additional information for the combined PCM recording on the PCM channel of the video recorder;
and the following method steps during playback:
- separation of digital, data-reduced audio signal from the digital additional information;
- reproduction of the original data format of the digital additional information;
- reproduction of the original audio signal from the data-reduced audio signal.

2. Device for recording and playing back television signals provided with digital additional information, comprising a video recorder having standard PCM channel for recording the audio signal, characterized in that the device for recording has:
- a stage (6) for reducing the dataset of the audio signal to be recorded;
- a separating stage (2) which extracts the digital additional information transmitted in the time intervals not occupied by picture information or spectral gaps in the television signal;
- a processing stage (3) which formats (3) the digital additional information for the PCM recording;
- a switching unit (4) which combines the data-reduced audio signal with the formatted digital additional information for the combined PCM recording on the PCM channel (5) of the video recorder;
and in that the device for playback has:
- a switching unit (10) which separates the digital, data-reduced audio signal from the digital additional information;
- a stage (11) for reproducing the original data format of the digital additional information;
- a stage (14, 15) for reproducing the original audio signal from the data-reduced audio signal.

3. Device according to Claim 2, characterized in that the stage (14, 15) for reproducing the original audio signal has a component (15) for reversing the data reduction and a digital/analog converter (14).

## Revendications

1. Procédé pour l'enregistrement et la reproduction de signaux de télévision comportant des informations supplémentaires numériques au moyen d'un appareil d'enregistrement vidéo avec un canal PCM standard pour l'enregistrement du signal audio, caractérisé par les opérations de base suivantes effectuées lors de l'enregistrement :
- réduction de la quantité des données du signal audio devant être enregistré;
- extraction de l'information supplémentaire numérique transmise dans les intervalles de temps qui ne sont pas occupés par des informations d'image ou dans des espaces spectraux libres du signal de télévision;
- mise en forme des informations supplémentaires numériques pour l'enregistrement dans le canal PCM;
- rassemblement du signal audio de données réduites et des informations supplémentaires numériques mises en forme pour l'enregistrement PCM commun sur le canal PCM de l'appareil d'enregistrement vidéo;
et par les opérations de base effectuées lors de la reproduction :
- séparation du signal audio de données réduites et numériques des informations supplémentaires numériques;
- restitution du format des données d'origine des informations supplémentaires numériques ;
- restitution du signal audio d'origine à partir du signal audio de données réduites.

2. Dispositif pour l'enregistrement et la reproduction de signaux de télévision comportant des informations supplémentaires numériques, composé d'un appareil d'enregistrement vidéo avec un canal PCM standard pour l'enregistrement du signal audio, caractérisé en ce que le dispositif pour l'enregistrement présente :
- un étage (6) pour la réduction de la quantité de données du signal audio devant être enregistré;
- un étage de séparation (2) qui extrait les informations supplémentaires numériques transmises dans les intervalles de temps qui ne sont pas occupés par des informations d'images ou dans des espaces spectraux libres du signal de télévision;
- un étage de préparation (3), qui met en forme les informations supplémentaires numériques pour l'enregistrement PCM;
- une unité de commutation (4), qui rassemble le signal audio de données réduites et les informations supplémentaires numériques mises en forme pour un enregistrement PCM commun sur le canal PCM (5) de l'appareil d'enregistrement vidéo;
et en ce que le dispositif de reproduction présente :
- une unité de commutation (10), qui sépare le signal audio de données réduites et numériques des informations supplémentaires numériques;
- un étage (11) pour la restitution du format de données d'origine des informations supplémentaires numériques;
- un étage (14, 15) pour la restitution du signal audio d'origine à partir du signal audio de données réduites.

3. Dispositif selon la revendication 2, caractérisé en ce que l'étage (14, 15) pour la restitution du signal audio d'origine présente une composante (15) pour l'annulation de la réduction de données et un convertisseur numérique - analogique (14).
